# EUROPÄISCHE PATENTSCHRIFT

(11) **EP 3 243 790 B1**
(45) Veröffentlichungstag und Bekanntmachung des Hinweises auf die Patenterteilung: **24.07.2019**
(21) Anmeldenummer: 17170608.8
(22) Anmeldetag: 11.05.2017
(51) Int. Cl.: B66F 9/075, B66F 9/14, B66F 9/06, B66F 17/00, B66F 9/07, B66F 9/10, B66F 9/20, F16F 15/02, F16F 7/00

(54) **FLURFÖRDERZEUG MIT EINER EINRICHTUNG ZUR REDUZIERUNG VON SCHWINGUNGEN**
INDUSTRIAL TRUCK COMPRISING A DEVICE FOR REDUCING VIBRATIONS
CHARIOT DE MANUTENTION COMPRENANT UN DISPOSITIF DE RÉDUCTION DE VIBRATIONS

(30) Priorität: 12.05.2016 DE 102016208205
(43) Veröffentlichungstag der Anmeldung: 15.11.2017
(73) Patentinhaber: Jungheinrich Aktiengesellschaft, 22047 Hamburg (DE)
(72) Erfinder: Schmalzl, Jürgen, 85778 Haimhausen (DE); Bibernell, Hubert, 84034 Landshut (DE); Schöttke, Carsten, 85368 Moosburg (DE); Magens, Ernst-Peter, 22949 Ammersbek (DE)
(74) Vertreter: Weickmann & Weickmann PartmbB

(56) Entgegenhaltungen:
- EP-B1- 2 368 832
- DE-A1- 2 512 521
- DE-A1- 10 054 789
- DE-A1-102013 113 428
- DE-U1-202015 004 375
- FR-A1- 2 243 144

## Beschreibung

Die Erfindung betrifft ein Flurförderzeug, insbesondere Dreiseitenstapler, umfassend:
ein Chassis,
ein an dem Chassis angeordnetes Hubgerüst, einen Fahrerplatz,
eine den Fahrerplatz abstützende Tragstruktur, die gemeinsam mit dem Fahrerplatz an dem Hubgerüst auf- und abwärts bewegbar ist und wenigstens eine von dem Hubgerüst abstehende Kragträgeranordung aufweist, die sich unter dem Fahrerplatz erstreckt und eine in Front des Fahrerplatzes angeordnete Lasttragbaugruppe stützt,
und eine Einrichtung zur Reduzierung von Schwingungen mit Schwingungskomponenten quer zur Hauptfahrtrichtung des Flurförderzeugs, die Schwingungsreduzierungsbewegungen der Lasttragbaugruppe relativ zu dem Hubgerüst ermöglicht.

Die Erfindung kann mit besonderen Vorzügen Anwendung finden bei Seitenstaplern und Hochregalstaplerfahrzeugen, insbesondere bei Kommissionier-Dreiseitenstaplern, bei welchen Lasttraggabelzinken für Seitenschuboperationen quer zur Geradeausfahrtrichtung des Flurförderzeugs orientiert bzw. ausrichtbar sind. Mit solchen Seitenstaplern in ihrer Bauart als Hochregalstaplerfahrzeuge lässt sich das Ein-und Ausstapeln ganzer Paletten und das Kommissionieren einzelner Artikel aus dem Hochregal mühelos verbinden. Hochregalstaplerfahrzeuge der hier betrachteten Art umfassen solche, bei denen ein Fahrerplatz an dem Hubgerüst auf-und abwärts bewegbar mittels eines Fahrerplatzträgers angeordnet ist, wobei an dem Fahrerplatz in dessen Front ein Seitenschubrahmen vorgesehen ist, der zusammen mit dem Fahrerplatz an dem Hubgerüst auf-und abwärts bewegbar ist und eine seitlich quer zur Geradeausfahrtrichtung des Flurförderzeugs hin- und her bewegbare Lasttragvorrichtung trägt. Da der Fahrerplatz mit einer sich darauf befindenden Bedienungsperson zusammen mit der Lasttragvorrichtung vertikal am Hubgerüst verfahrbar ist, bezeichnet man derartige Flurförderzeuge auch als man-up-Fahrzeuge oder man-up-Flurförderzeuge. Bei verschiedenen Bautypen von man-up-Flurförderzeugen ist das Hubgerüst teleskopisch ausfahrbar und einziehbar, wobei der Fahrerplatz an der am höchsten ausfahrbaren Teleskopstufe des Hubgerüstes höhenverstellbar befestigt ist.

Die an dem Seitenschubrahmen bewegbar geführte Lasttragvorrichtung kann ein Zusatzhubgerüst mit daran relativ zum Fahrerstand auf-und abwärts bewegbaren Lastaufnahmemitteln umfassen, bei denen es sich üblicherweise um Lasttragzinken bzw. um eine Lasttraggabel mit solchen Lasttragzinken handelt. Das Zusatzhubgerüst ist an einem Seitenschubgerät in der Bauart als Schwenkschubgerät angeordnet und daran um eine üblicherweise vertikale Achse um ca. 180° schwenkbar, so dass die an dem Zusatzhubgerüst höhenverstellbar befestigte Lasttraggabel aus einer Stellung mit Ausrichtung seitlich quer zur Geradeausfahrtrichtung des Flurförderzeugs in eine Stellung mit entgegengesetzter seitlicher Ausrichtung verschwenkt werden kann. Das Seitenschubgerät ist an dem Seitenschubrahmen linear geführt.

Eine typische Aufgabe für das Flurförderzeug besteht zum Beispiel darin, eine Palette mit darauf befindlicher Last in ein Regal einzulagern, wobei sich das Flurförderzeug in einem Schmalgang zwischen Regalen eines Hochregallagers befindet und die Palette auf der Lasttraggabel aufgenommen ist. Das Einschieben der Palette in das Regal erfolgt seitlich quer zur Geradeausfahrtrichtung des Flurförderzeugs, wobei vorausgesetzt sei, dass die Lasttraggabel bereits seitlich zu dem Regal hin korrekt auf den gewünschten Lagerplatz ausgerichtet ist und sich das Seitenschubgerät mit dem daran vorgesehenen Zusatzhubgerüst in einer seitlichen Endstellung an dem vom betreffenden Regal entfernten Ende des Seitenschubrahmens befindet. Durch lineares seitliches Verschieben des Schwenkschubgerätes entlang des Seitenschubrahmens kann dann die beladene Palette in das Regal eingeführt werden.

Zum Antreiben der verschiedenen bewegbaren Komponenten an dem Hubgerüst sind verschiedene steuerbare Antriebsmittel vorgesehen. Sie dienen je nach Ausstattung des Flurförderzeugs zum Bewegen der Lastaufnahmemittel am Zusatzhubgerüst, zum Schwenken des Zusatzhubgerüstes um eine Hochachse, zum Bewegen der Lasttragvorrichtung bzw. des Seitenschubgerätes an dem Seitenschubrahmen, zum Bewegen des Fahrerplatzes am Hubgerüst und ggf. zum teleskopischen Ausfahren und Einziehen des Hubgerüstes. Üblicherweise und vorzugsweise handelt es sich dabei um hydraulische Antriebsmittel, wobei jedoch andere Antriebe nicht ausgeschlossen sein sollen.

Es ist ein bekanntes Problem, dass bei Flurförderzeugen der hier betrachteten Art Schwingungen am Hubgerüst, insbesondere Schwingungen mit horizontal seitlichen, d.h. quer zur Geradeausfahrtrichtung des Flurförderzeuges gerichteten Schwingungskomponenten auftreten, insbesondere bei Fahrt auf unebenem Fahruntergrund. Solche Schwingungen sind oft umso heftiger je höher der Fahrerplatz und seine Vorbaugeräte am Hubgerüst angehoben sind und je größer die mittels der Lasttragvorrichtung ggf. aufgenommene Last ist. Solche Schwingungsbewegungen machen eine schnelle Fahrt im Schmalgang und das Einlagern und Auslagern von Paletten in- und aus Regalen schwierig oder gar zeitweise unmöglich, so dass die Bedienungsperson einen Einlagerungs -oder Auslagerungsvorgang erst dann sicher einleiten kann, wenn die Schwingungen bei stehendem Flurförderzeug abgeklungen sind. Alternativ könnte die Bedienungsperson das Flurförderzeug bei Fahrt auf unebenem Boden grundsätzlich mit reduzierter Geschwindigkeit fahren, um Schwingungsanregungen weitestgehend zu vermeiden. Beides würde jedoch die Produktivität bei der Arbeit mit dem Flurförderzeug senken.

Aus der EP 2 368 832 B1 ist ein als man-up-Fahrzeug ausgebildetes Flurförderzeug der eingangs genannten Art bekannt, bei dem bereits Maßnahmen zur Schwingungsreduzierung getroffen wurden. Diese Maßnahmen bestehen darin, dass eine als Lastaufnahmeabschnitt bezeichnete, am Hubgerüst auf- und ab bewegbare, den Fahrerplatz, dessen Tragstruktur und die damit verbundene Lasttragvorrichtung zusammenhängend umfassende Baugruppe so mittels einer als Hilfsträger bezeichneten und unmittelbar höhenbeweglich an dem Hubgerüst befestigten massiven Adapterplatte an dem Hubgerüst angebracht ist, dass sie insgesamt quer zur Geradeausfahrtrichtung (Hauptfahrtrichtung) des Flurförderzeugs Bewegungen mit einer seitlichen, d.h. normalerweise horizontalen Bewegungskomponente relativ zu der Adapterplatte und somit dem Hubgerüst ausführen kann, wobei hierzu ein gesonderter, nicht für den planmäßigen Betrieb des Flurförderzeugs vorgesehener Bewegungsfreiheitsgrad für die Baugruppe eingerichtet ist. Das bekannte Flurförderzeug weist Mittel zum Dämpfen oder Vermeiden von Schwingungen in der relativen Lage zwischen dem Lastaufnahmeabschnitt und dem Hubgerüst, d.h. zwischen dem Fahrerstand (Fahrerplatz) und der Adapterplatte auf. Dabei kann es sich um aktive, semi-aktive und/oder passive Schwingungsdämpfungsmittel handeln, die geeignet sind, eine Kraft oder ein Moment zwischen der Adapterplatte und dem Lastaufnahmeabschnitt zu erzeugen, die bzw. das eine Komponente entlang des gesonderten, nicht für den planmäßigen Betrieb des Flurförderzeugs vorgesehenen Bewegungsfreiheitsgrades hat. In der EP 2 368 832 B1 sind zur Schwingungsreduzierung u.a. Dämpfungselemente und Federn vorgeschlagen, die einer Auslenkung des Hubgerüstes und der als Lastaufnahmeabschnitt bezeichneten Baugruppe entlang des gesonderten Bewegungsfreiheitsgrades entgegenwirken. Die massive Adapterplatte stellt ein relativ schweres Zusatzbauteil dar, welches als sogenanntes "Totgewicht" bei jedem Hubvorgang mit gehoben werden muss und außerdem das Gesamtgewicht des Flurförderzeugs entsprechend vergrößert.

Die Schrift DE 20 2015 004375 U offenbart ein Flurförderzeug gemäß dem Oberbegriff des Anspruchs 1.

Der Erfindung liegt die Aufgabe zu Grunde, für ein Flurförderzeug der eingangs genannten Art schwingungsreduzierende Maßnahmen vorzuschlagen, die herstellungstechnisch relativ einfach ohne nennenswerte Gewichtsvergrößerung des Flurförderzeugs umzusetzen sind und einen effizient schwingungsreduzierten Betrieb ermöglichen.

Erfindungsgemäß wird ein Flurförderzeug mit den Merkmalen des Patentanspruchs 1 vorgeschlagen, nämlich ein Flurförderzeug, insbesondere Dreiseitenstapler, umfassend
ein Chassis,
ein an dem Chassis angeordnetes Hubgerüst,
einen Fahrerplatz,
eine den Fahrerplatz abstützende Tragstruktur, die gemeinsam mit dem Fahrerplatz an dem Hubgerüst auf- und abwärts bewegbar ist und wenigstens eine von dem Hubgerüst abstehende Kragträgeranordung aufweist, die sich unter dem Fahrerplatz erstreckt und in Front des Fahrerplatzes an einem Seitenschubrahmen befestigt ist, der Teil einer Lasttragbaugruppe ist, und eine Einrichtung zur Reduzierung von Schwingungen mit Schwingungskomponenten quer zur Hauptfahrtrichtung des Flurförderzeugs, die Schwingungsreduzierungsbewegungen der Lasttragbaugruppe relativ zu dem Hubgerüst ermöglicht, wobei die Kragträgeranordung unterhalb des Fahrerplatzes eine Teilung aufweist und als einen Teil einen ersten Kragträgerabschnitt aufweist, der mit dem Hubgerüst gekoppelt und höhenbeweglich daran geführt ist, und als einen weiteren Teil einen die Lasttragbaugruppe tragenden zweiten Kragträgerabschnitt aufweist, der so mit dem ersten Kragträgerabschnitt verbunden ist, dass er relativ zu diesem gemeinsam mit der Lasttragbaugruppe Schwingungsreduzierungsbewegungen insbesondere mit Bewegungskomponenten quer zur Hauptfahrtrichtung des Flurförderzeugs ausführen kann, wobei der zweite Kragträgerabschnitt zur gemeinsamen Bewegung mit dem Seitenschubrahmen verbunden ist.

Gemäß einem Grundgedanken der vorliegenden Erfindung sollen keine schweren Zusatzträgerbauteile bei der Umsetzung der schwingungsreduzierenden Maßnahmen zum Einsatz kommen, sondern anstelle dessen sollen Tragstrukturen, die bei gattungsgemäßen Flurförderzeugen ohnehin vorhanden sind, so modifiziert werden, dass sie eine entsprechende Funktion im Zusammenhang mit den schwingungsreduzierenden Maßnahmen erfüllen, ohne eine nennenswerte Gewichtsvergrößerung des Flurförderzeugs mit sich zu bringen.

Eine in diesem Sinne nutzbare Tragstruktur gattungsgemäßer Flurförderzeuge wird in der Fachwelt gelegentlich auch als Fahrerplatzträger bezeichnet. Dieser ist dadurch gekennzeichnet, dass er eine Kragträgeranordung, also eine vom Hubgerüst nach vorn abstehende Auskragung beispielsweise in Form von Kragarmen oder eines mit aussteifenden Kantungen versehenen, auskragenden Bleches, aufweist und höhenbeweglich an dem Hubgerüst fixiert ist, wobei die Kragträgeranordung als Ausleger von dem Hubgerüst in normalerweise horizontaler Richtung nach vorne absteht und sich dabei unter dem Fahrerplatz erstreckt.

Gemäß der vorliegenden Erfindung hat der Fahrerplatzträger eine Modifizierung dahingehend erfahren, dass die Kragträgeranordung eine Teilung aufweist und als einen ersten Teil den ersten Kragträgerabschnitt aufweist, der mit dem Hubgerüst gekoppelt und höhenbeweglich daran geführt ist. Die Kopplung ist in Bezug auf Horizontalbewegungen relativ zu dem Hubgerüst vorzugsweise starr, jedenfalls aber "härter" als die Kopplung zwischen dem als zweiten Teil der Kragträgeranordung vorhandenen zweiten Kragträgerabschnitt und dem ersten Kragträgerabschnitt. Der zweite Kragträgerabschnitt ist so an dem ersten Kragträgerabschnitt gelagert, dass er relativ dazu Schwingungsreduzierungsbewegungen insbesondere mit horizontalen Bewegungskomponenten quer zur Hauptfahrtrichtung des Flurförderzeugs ausführen kann.

Grundsätzlich könnte der zweite Kragträgerabschnitt so an dem ersten Kragträgerabschnitt angeordnet sein, dass er in verschiedenen Richtungen begrenzt bewegbar und ggf. sogar in gewissem Maße um eine oder gegebenenfalls mehrere Achsen schwenkbar gelagert ist und seine Masse sowie die Masse von von dem zweiten Kragträgerabschnitt getragenen Komponenten bzw. Lasten von der Masse des Restfahrzeuges "entkoppelt oder weich damit gekoppelt" ist.

Ein Grundgedanke der Erfindung besteht darin, den zweiten Kragträgerabschnitt und jede davon getragene Last, d.h. deren Massen, und das Restfahrzeug, d.h. dessen Masse, nicht starr miteinander zu koppeln, so dass der zweite Kragträgerabschnitt und die von dem zweiten Kragträgerabschnitt getragenen Komponenten bzw. Lasten gemeinsam beschleunigten Bewegungen, wie sie bei Hubmastschwingungen auftreten, vorzugsweise nur indirekt, verzögert und phasenverschoben folgen können und dabei Bewegungsenergie in eine andere Energieform, insbesondere Wärme, umgewandelt wird.

Der erste Kragträgerabschnitt ist vorzugsweise so an dem Hubgerüst höhenbeweglich geführt, dass er relativ dazu keinen horizontalen Bewegungsfreiheitsgrad quer zur Hauptfahrtrichtung des Flurförderzeugs aufweist. Auf diese Weise ist auch bei zahlreichen gattungsgemäßen Flurförderzeugen nach dem Stand der Technik der Fahrerplatzträger an dem Hubgerüst angebracht. Es sind somit im Vergleich mit gattungsgemäßen Flurförderzeugen nach dem Stand der Technik an der Schnittstelle zwischen dem Hubgerüst und dem Fahrerplatzträger keine gesonderten Zusatzträgerbauteile oder Adapterplatten erforderlich.

Gemäß einer Ausführungsform der Erfindung ist der Fahrerplatz an dem ersten Kragträgerabschnitt abgestützt und im Wesentlichen starr damit verbunden, so dass der Fahrerplatz Schwingungsreduzierungsbewegungen des zweiten Kragträgerabschnitts nicht unmittelbar mitmacht. Somit hat bei dieser Ausführungsform der Erfindung nur der erste Kragträgerabschnitt eine Fahrerplatzträgerfunktion. Dies kann dahingehend vorteilhaft sein, dass eine auf dem Fahrerplatz befindliche Bedienungsperson des Flurförderzeugs Schwingungsausgleichsbewegungen des zweiten Kragträgerabschnittes und damit verbundener Komponenten nicht ausgesetzt ist. Dies wird von Bedienungspersonen oft als angenehmer empfunden. Da an dem zweiten Kragträgerabschnitt eine zumindest bereichsweise in Front des Fahrerplatzes angeordnete Lasttragbaugruppe befestigt ist, die gemeinsam mit dem zweiten Kragträgerabschnitt Schwingungsreduzierungsbewegungen relativ zu dem ersten Kragträgerabschnitt ausführen kann, ist die an den Schwingungsreduzierungsbewegungen teilnehmende Gesamtmasse insbesondere bei mittels der Lasttragbaugruppe aufgenommener Nutzlast auch dann noch vorteilhaft groß, wenn die Masse des Fahrerplatzes und gegebenenfalls einer darauf befindlichen Bedienungsperson an diesen Schwingungsreduzierungsbewegungen oder Schwingungsausgleichsbewegungen nicht teilnimmt.

Gemäß einer anderen Ausführungsform der Erfindung ist die Fahrerplatzplattform an dem zweiten Kragträgerabschnitt zur gemeinsamen Bewegung damit abgestützt, sodass der Fahrerplatz gemeinsam mit dem zweiten Kragträgerabschnitt Schwingungsreduzierungsbewegungen relativ zu dem ersten Kragträgerabschnitt ausführen kann. Diese Ausführungsform hat den Vorteil, dass die Masse des Fahrerplatzes und einer gegebenenfalls darauf befindlichen Bedienungsperson an den Schwingungsreduzierungsbewegungen des zweiten Kragträgerabschnittes teilnehmen können, um den Schwingungsreduzierungseffekt bei vorausgesetzter größerer Masse des Restfahrzeuges entsprechend zu vergrößern und die Bedienperson nur den bereits reduzierten Schwingungsbewegungen ausgesetzt ist. Weiterhin bewegen sich der Fahrerplatz mit dem Bediener und die davor im Blickfeld des Bedieners befindliche Last synchron.

Die Lasttragbaugruppe umfasst gemäß einer Weiterbildung der Erfindung ein Seitenschubgerät, welches seitlich quer zur Hauptfahrtrichtung des Flurförderzeugs bewegbar an dem Seitenschubrahmen gelagert ist, und eine an dem Seitenschubgerät angeordnete Lasttragvorrichtung, die zusammen mit dem Seitenschubgerät mittels einer steuerbaren Seitenschubantriebseinrichtung seitlich quer zur Hauptfahrtrichtung des Flurförderzeugs bewegbar ist. Es handelt sich hierbei um typische Komponenten eines Seitenstaplers.

Gemäß einer bevorzugten Ausführungsform der Erfindung ist die Teilung der Kragträgeranordung in der Weise zumindest näherungsweise und abschnittsweise horizontal ausgebildet, dass sich der erste Kragträgerabschnitt zumindest mit einem Großteil seiner vom Hubgerüst abstehenden Dimension unterhalb des zweiten Kragträgerabschnittes - diesen von unten abstützend -erstreckt, wobei der zweite Kragträgerabschnitt mittels einer Lageranordnung bewegbar an dem ersten Kragträgerabschnitt gelagert ist. Eine solche Ausführungsform lässt sich relativ problemlos realisieren, auch was das Sicherstellen einer hinreichenden Kraftaufnahmefähigkeit bzw. Momentenaufnahmefähigkeit des ersten Kragträgerabschnittes unter der Bedingung der Bereitstellung des Bewegungsfreiheitsgrades des zweiten Kragträgerabschnittes relativ zum ersten Kragträgerabschnitt anbetrifft.

Bei einer anderen Ausführungsform der Erfindung ist es vorgesehen, dass die Teilung der Kragträgeranordung in der Weise vertikal oder schräg von oben nach unten ausgebildet ist, dass der zweite Kragträgerabschnitt in Front des ersten Kragträgerabschnittes so angeordnet ist, dass sich die Trennungslinie zwischen den Kragträgerabschnitten von oben nach unten verlaufend erstreckt, wobei der zweite Kragträgerabschnitt mittels einer Lageranordnung bewegbar an dem ersten Kragträgerabschnitt gelagert ist, welche sowohl Zugkräfte als auch Druckkräfte zwischen den beiden Kragträgerabschnitten aufnehmen kann. Bei dieser Ausführungsform kann die Trennungslinie beispielsweise bis in die Nähe eines von dem zweiten Kragträgerabschnitt getragenen Seitenschubrahmens vorgelagert sein. Auf diese Weise bietet der erste Kragträgerabschnitt relativ viel Platz zur Abstützung des Fahrerplatzes bei einer Ausführungsform der Erfindung mit an dem ersten Kragträgerabschnitt befestigtem Fahrerplatz.

Ganz allgemein ist es bevorzugt, dass der zweite Kragträgerabschnitt durch ein die Bewegung des zweiten Kragträgerabschnittes relativ zum ersten Kragträgerabschnitt beeinflussendes passives oder/und aktives Dämpfungssystem mit dem ersten Lastträgerabschnitt gekoppelt ist
Ein solches Dämpfungssystem kann beispielsweise an geeigneter Stelle in oder nahe der Schnittstelle zwischen den Kragträgerabschnitten angeordnet sein.

Insbesondere in der Ausführungsform als passives Dämpfungssystem umfasst dieses vorzugsweise eine Reibungsdämpfungsanordnung. Reibungsdämpfungsanordnungen sind in diversen Ausführungsformen realisierbar, so z.B. als Reibungsklammer-Reibungsschiene-Paar, wobei eine der Komponenten eines solchen Paares an dem zweiten Kragträgerabschnitt und die andere Komponente an dem ersten Kragträgerabschnitt angekoppelt sein sollte. Zusätzlich oder alternativ könnte eine im Rahmen der Erfindung zu nutzende Reibungsdämpfungsanordnung wenigstens einen hydraulischen oder/und pneumatischen Reibungsdämpfungszylinder umfassen. Ein solcher Reibungsdämpfungszylinder kann zum Beispiel mit einer hydropneumatischen Federspeicheranordnung verbunden sein, welche einer Auslenkung des Kolbens des Reibungsdämpfungszylinders aus einer Nulllage heraus entgegenwirkt.

Gemäß einer solchen Ausführungsform der Erfindung mit einer Reibungsdämpfungsanordnung kann es vorgesehen sein, dass der zweite Kragträgerabschnitt im Wesentlichen ausschließlich gleitend an dem ersten Kragträgerabschnitt bewegbar geführt ist, wobei wenigstens eine der aneinander gleitenden Flächen einen Reibbelag aufweisen sollte, um eine effiziente Bremswirkung bei der Bewegung des zweiten Kragträgerabschnittes relativ zu dem ersten Kragträgerabschnitt zu erzeugen.

Ganz allgemein können Endanschläge vorgesehen sein, die den Bewegungsbereich des zweiten Kragträgerabschnittes relativ zum ersten Kragträgerabschnitt begrenzen. Auch können aktiv betreibbare Rückstellmittel vorgesehen sein, die den zweiten Kragträgerabschnitt in eine Soll-Nullposition (Mittenposition) zurück bewegen, falls er außerhalb dieser Soll-Nullposition am Ende eines Schwingungsreduzierungvorgangs stoppen sollte.

Gemäß einer anderen Ausführungsform der Erfindung ist der zweite Kragträgerabschnitt vermittels einer Rollenlageranordnung mit dem ersten Kragträgerabschnitt gekoppelt, so dass der zweite Kragträgerabschnitt unter Drehung von Rollen der Rollenlageranordnung Schwingungsreduzierungsbewegungen relativ zu dem ersten Kragträgerabschnitt ausführen kann. Auch diese Ausführungsform der Erfindung lässt Varianten zu. Eine dieser Varianten könnte darin bestehen, dass die Rollen relativ schwergängig gelagert sind, so dass sie eine Bremswirkung auf die Bewegungsdynamik des zweiten Kragträgerabschnittes haben, wobei dies auch noch in Abhängigkeit von der Masse von einer an dem zweiten Kragträgerabschnitt bevorzugt vorgesehenen Lasttragbaugruppe aufgenommenen Last variierbar sein kann.

Zusätzlich oder alternativ könnten die Rollen auch so ausgestaltet und gelagert sein, dass eine federnde Rückstellkraft beispielsweise einer Drehfeder, z.B. Spiralfeder, auf sie wirkt, wobei die Rückstellkraft die betreffende Rolle zu einer Vorzugsruhedrehstellung hin belastet.

Gemäß einer weiteren Variante könnten die Rollen auch leichtgängig gelagert sein und eine schwingungsmindernde Bewegungsbeeinflussung der des zweiten Kragträgerabschnittes mittels anderer Einrichtungen, zum Beispiel einer Reibungsdämpfungsanordnung vorzunehmen sein.

Vorzugsweise umfasst das Dämpfungssystem ferner eine Federanordnung, die so eingestellt ist, dass sie den zweiten Kragträgerabschnitt zu einer Soll-Ruhestellung (Nullage) relativ zum ersten Kragträgerabschnitt hin belastet oder vorspannt. Wie schon erwähnt, kann diese einen hydropneumatischen oder pneumatischen Federspeicher umfassen. Aber auch mechanische Federn, beispielsweise Schraubenfedern, Blattfedern usw. kommen in Frage.

Gemäß einer weiteren Ausführungsform der Erfindung umfasst das Dämpfungssystem wenigstens eine aktive Komponente, insbesondere wenigstens einen steuerbaren hydraulischen oder/und pneumatischen Zylinder oder/und wenigstens einen steuerbaren Elektromotor, vorzugsweise einen Servomotor, wobei die aktive Komponente des Dämpfungssystems zwischen dem ersten Kragträgerabschnitt und dem zweiten Kragträgerabschnitt wirksam ist, um den zweiten Kragträgerabschnitt in schwingungsreduzierender Weise zu beaufschlagen. Dabei wird der zweite Kragträgerabschnitt aktiv und dynamisch tendenziell in seiner Soll-Nullposition relativ zum ersten Kragträgerabschnitt gehalten.

Eine Steuerungseinrichtung ist in einem aktiven Dämpfungssystem vorgesehen, um die aktiven Komponenten zu steuern. Ferner können Sensoren vorgesehen sein, die Schwingungsamplituden des Hubgerüstes oder daran höhenbeweglich angeordneter Komponenten erfassen, wobei die Steuerungseinrichtung Daten dieser Sensoren verarbeiten kann, um die aktiven Komponenten im Sinne einer optimierten Schwingungsreduzierung zu steuern. In diesem Sinne können auch Sensoren vorgesehen sein, die die Relativbewegung des zweiten Kragträgerabschnittes relativ zum ersten Kragträgerabschnitt erfassen.

Wie oben bereits dargelegt, kann die vorliegende Erfindung insbesondere bei einem Seitenstapler, insbesondere in der Bauform als Hochregalstaplerfahrzeug, vorteilhaft eingesetzt werden, um Querschwingungen des Hubgerüstes und daran höhenbeweglich angeordneter Komponenten, d.h. Schwingungen mit Horizontalkomponenten quer zur Geradeausfahrtrichtung des Flurförderzeugs, zu reduzieren. Demgemäß ist das Flurförderzeug bevorzugt als Seitenstapler, insbesondere als Dreiseitenstapler, ausgebildet, welcher als Lastträgerelement eine Lasttraggabel mit Lasttragzinken aufweist, welche seitlich quer zur Geradeausfahrtrichtung des Flurförderzeugs orientiert bzw. ausrichtbar sind.

Die Einrichtung zur Reduzierung von Schwingungen kann gemäß einer Weiterbildung der Erfindung wahlweise aktivierbar und deaktivierbar sein. Hierzu kann eine steuerbare Verriegelungsvorrichtung vorgesehen sein, welche den zweiten Kragträgerabschnitt mit dem ersten Kragträgerabschnitt im deaktivierten Zustand der Einrichtung zur Reduzierung von Schwingungen im Wesentlichen starr koppelt, und welche den zweiten Kragträgerabschnitt aus der starren Kopplung freigibt, wenn die Einrichtung zur Reduzierung von Schwingungen aktiviert wird.

Gemäß einer Ausführungsform der Erfindung ist die Einrichtung zur Reduzierung von Schwingungen in Abhängigkeit vom jeweiligen Betriebszustand des Flurförderzeugs steuerbar, insbesondere aktivierbar bzw. deaktivierbar. Die Steuerung der Einrichtung zur Reduzierung von Schwingungen kann je nach Ausgestaltung dieser Ausführungsform z.B. in Abhängigkeit von der Fahrbeschleunigung oder/und Fahrgeschwindigkeit des Flurförderzeugs, von der jeweiligen Hubhöhe der Lasttragbaugruppe, der Masse der davon getragenen Last, von der Ausrichtung von Lasttraggabelzinken, von Stößen, etwa bei Fahrbahnunebenheiten, vom Aufenthaltsort bzw. von der Umgebung des Flurförderzeugs, etwa wenn sich dieses in einem Schmalgang eines Hochregallagers befindet, usw. erfolgen, wobei Sensoren oder sonstige Erfassungsmittel zur Erfassung dieser Parameter vorgesehen sind. So kann gemäß einer Variante der Erfindung die Steuerung der Einrichtung zur Reduzierung von Schwingungen die "Starrheit bzw. Härte" der Kopplung zwischen dem zweiten Kragträgerabschnitt und dem ersten Kragträgerabschnitt in Abhängigkeit von einem oder mehreren dieser Parameter ändern. Je weniger Schwingungsreduzierungsbedarf gegeben ist, desto starrer bzw. härter kann die Kopplung zwischen den Kragträgerabschnitten beispielsweise eingestellt werden.

Soll die Einrichtung zur Reduzierung von Schwingungen beispielsweise nur zur Reduzierung von Querschwingungen wirksam werden, so kann es vorgesehen sein, dass sie in Abhängigkeit von der Ausrichtung der Lasttraggabelzinken oder/und in Abhängigkeit von der Hubhöhenstellung der Lasttraggabelzinken steuerbar ist, so dass sie beispielsweise nur bei Querstellung der Lasttraggabelzinken relativ zur Geradeausfahrtrichtung des Flurförderzeugs wirksam ist. Dies gegebenenfalls auch nur dann, wenn sich das Flurförderzeug in einem Schmalgang befindet.

Ausführungsbeispiele der Erfindung werden nachstehend unter Bezugnahme auf die Figuren erläutert.
Figur 1 zeigt in einer Seitenansicht ein Ausführungsbeispiel eines Flurförderzeugs nach der Erfindung, welches als Dreiseiten-Hochregalstapler ausgebildet ist.
Figur 2 zeigt in einer Seitenansicht die am Hubgerüst des Flurförderzeugs gemäß Figur 1 höhenbeweglich angeordnete Tragstruktur mit einer Kragträgeranordung zur Abstützung eines Fahrerplatzes und eines vorderseitig daran fixierten Seitenschubrahmens.
Figur 3 zeigt in einer Seitenansicht eine am Hubgerüst eines Flurförderzeugs der in Figur 1 gezeigten Bauart höhenbeweglich anzuordnende Alternative Tragstruktur mit einer Kragträgeranordung zur Abstützung eines Fahrerplatzes und einem vorderseitig daran fixierten Seitenschubrahmen eines weiteren Ausführungsbeispiels der Erfindung.

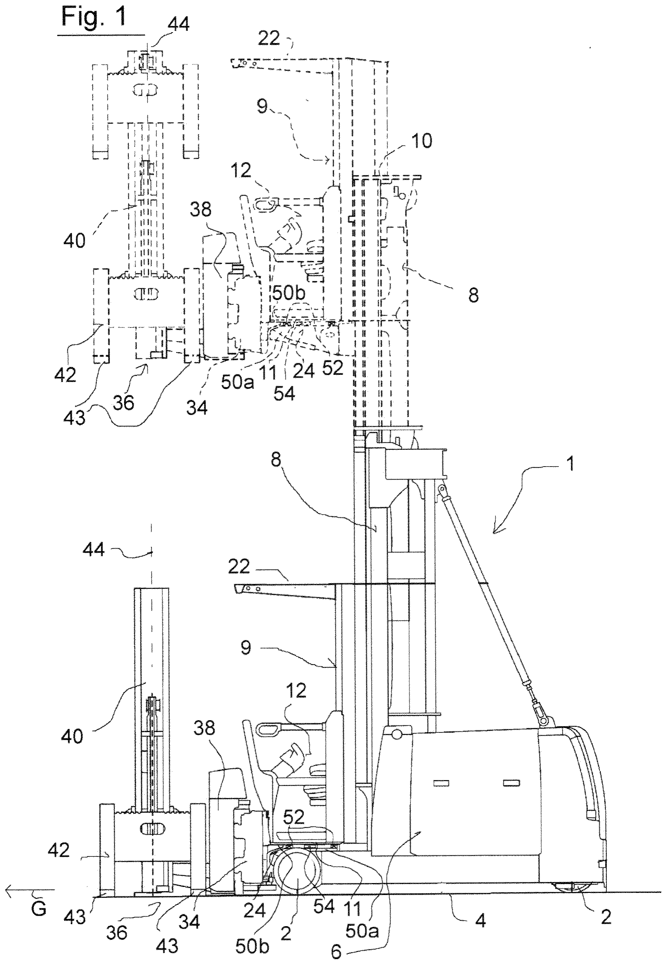

Figur 1 zeigt in einer Seitenansicht ein Ausführungsbeispiel eines Flurförderzeugs 1 nach der Erfindung, nämlich einen Hochregalstapler, der als Dreiseitenstapler ausgebildet ist.

Das Flurförderzeug weist ein über Räder 2 am Fahruntergrund 4 abgestütztes Chassis 6 und ein an dem Chassis 6 aufrecht stehend befestigtes Hubgerüst 8 auf. Das Hubgerüst 8 ist mehrteilig teleskopisch ausfahrbar ausgebildet, wie dies in Figur 1 anhand der mit gestrichelten Linien gezeigten Ausfahrstellung zu erkennen ist. An der am weitesten ausfahrbaren Teleskopstufe 10 des Hubgerüstes 8 ist eine Tragstruktur 9 als Fahrerplatzträger vertikal verfahrbar angebracht. Die Tragstruktur 9 weist eine vom Hubgerüst 8 in Hauptfahrtrichtung G des Flurförderzeugs nach vorn abstehende Kragträgeranordung 24 als Ausleger auf, die eine Plattform 11 eines Fahrerplatzes 12 an deren Unterseite abstützt und die und an ihrem abstehenden Ende einen Seitenschubrahmen 34 trägt.

Der Fahrerplatz 12 ist als hebbare Fahrerkabine ausgestaltet, die einen Rahmen mit der Fahrerplatzplattform 11 als Kabinenboden, eine Rückwand, Wangen und ein Fahrerschutzdach 22 aufweist. In Front des Fahrerplatzes 12 ist an der Kragträgeranordung 24 der Seitenschubrahmen 34 befestigt.

Der Seitenschubrahmen 34 ist Teil einer an sich bekannten Lasttragbaugruppe 36, die ferner ein seitlich quer zur Geradeausfahrtrichtung G des Flurförderzeugs verschiebbar an dem Seitenschubrahmen 34 angeordnetes Seitenschubgerät 38 in der Bauform als Schwenkschubgerät 38 mit einem vorne daran angeordneten Zusatzhubgerüst 40 aufweist, an welchem als Lastträgerelement eine Lasttraggabel 42 mit einer Gabelträgeranordnung vertikal verfahrbar ist. Das Zusatzhubgerüst 40 ist zusammen mit der Lasttraggabel 42 um die Hochachse 44 zwischen der in Fig.1 gezeigten Stellung mit seitlicher Ausrichtung der Lasttraggabel 42 bzw. deren Lasttragzinken 43 (Querausrichtung nach links in Bezug auf die Geradeausfahrtrichtung G) und einer Stellung mit entgegengesetzter seitlicher Ausrichtung (Querausrichtung nach rechts) der Lasttragzinken 43 schwenkbar.

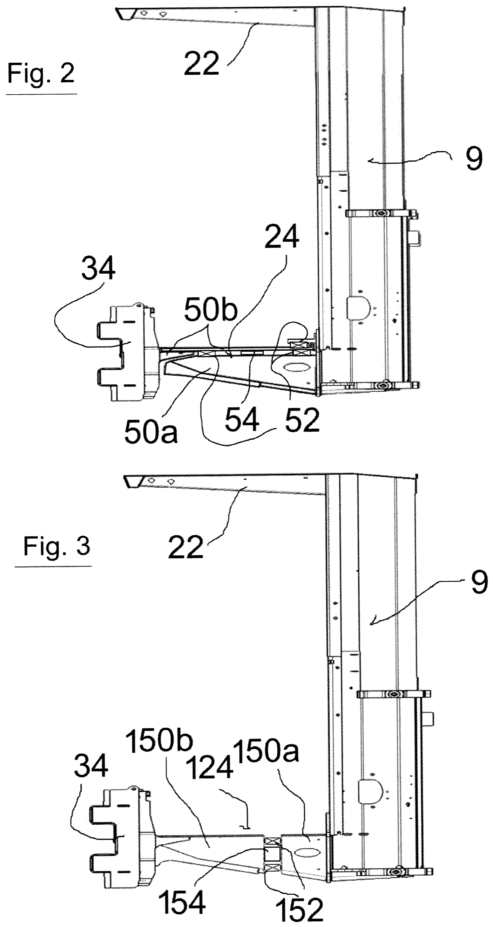

Besonderheit des Flurförderzeugs nach der Erfindung ist eine Einrichtung zur Reduzierung von Schwingungen, welche insbesondere dazu eingerichtet ist, Schwingungen mit Horizontalauslenkungskomponenten quer zur Hauptfahrtrichtung G des Flurförderzeugs zu reduzieren. Hierzu ist in dem gezeigten Ausführungsbeispiel die Kragträgeranordung 24 in einen ersten Kragträgerabschnitt 50a und in einen zweiten Kragträgerabschnitt 50b unterteilt (vergleiche insbesondere Figur 2), wobei der erste Kragträgerabschnitt 50a fester Teil der Tragstruktur 9 ist, so dass er an dem Hubgerüst 8 mit der Tragstruktur 9 vertikal verfahrbar ist, jedoch keinen Bewegungsfreiheitsgrad horizontal quer zur Hauptfahrtrichtung G des Flurförderzeugs relativ zu dem Hubgerüst 8 hat.

Allerdings ist der zweite Kragträgerabschnitt 50b vermittels einer Lageranordnung 52, die in Figur 1 und Figur 2 nur schematisch angedeutet ist, an dem ersten Kragträgerabschnitt 50a bewegbar angeordnet, so dass der zweite Kragträgerabschnitt 50b mit der daran befestigten Lastträgerbaugruppe 36 Schwingungsausgleichsbewegungen, d.h. Schwingungsreduzierungsbewegungen, relativ zum ersten Kragträgerabschnitt 50a und somit relativ zu dem Hubgerüst 8 ausführen kann.

Die Lageranordnung 52 kann zum Beispiel als Gleitlager oder/und als Rollenlager usw. ausgebildet sein und bildet als Teil der Einrichtung zur Reduzierung von Schwingungen eine Schnittstelle zwischen den Kragträgerabschnitten 50a und 50b, die Schwingungsreduzierungsbewegungen des zweiten Kragträgerabschnittes 50b und der davon getragenen Lastträgerbaugruppe 36 und einer gegebenenfalls darauf abgestützten Nutzlast relativ zum ersten Kragträgerabschnitt 50a mit Horizontalbewegungskomponenten quer zur Hauptfahrtrichtung (Geradeausfahrtrichtung) G des Flurförderzeugs ermöglicht.

Bei dem Ausführungsbeispiel gemäß Figur 1 und Figur 2 ist die Kragträgeranordung 24 näherungs- und bereichsweise horizontal in den ersten Kragträgerabschnitt 50a und den zweiten Kragträgerabschnitt 50b geteilt, so dass sich der zweite Kragträgerabschnitt 50b oberhalb des ersten Kragträgerabschnittes 50a erstreckt und über die Lageranordnung 52 an dem ersten Kragträgerabschnitt 50a aufliegend abgestützt ist. Der zweite Kragträgerabschnitt 50b kann als Unterlage der Fahrerplatzplattform 11 dienen oder gleich die Fahrerplatzplattform bilden.

Bei dem Ausführungsbeispiel gemäß Figur 3 ist die Kragträgeranordung 124 näherungsweise vertikal in den ersten Kragträgerabschnitt 150a und den zweiten Kragträgerabschnitt 150b geteilt, so dass sich der zweite Kragträgerabschnitt 150b vordem ersten Kragträgerabschnitt 150a befindet, wobei zwischen den Kragträgerabschnitten 150a und 150b eine Lageranordnung 152 als Schnittstelle vorgesehen ist, die sowohl Zugkräfte als auch Druckkräfte und Querkräfte zwischen den beiden Kragträgerabschnitten 150a, 150b aufnehmen kann. Insbesondere bei dem Ausführungsbeispiel gemäß Figur 3 kann ein entsprechender Fahrerplatz auf einfache Weise an dem ersten Kragträgerabschnitt 150a angekoppelt sein, so dass der Fahrerplatz Schwingungsausgleichsbewegungen des zweiten Kragträgerabschnittes 150b nicht mitmachen muss. Umgekehrt kann der Fahrerplatz an den zweiten Kragträgerabschnitt 150b gekoppelt sein, so dass er nur die reduzierten Schwingungsbewegungen dieses Abschnittes mitmachen muss.

Es ist aber nicht ausgeschlossen, dass auch bei einem entsprechend gestalteten Ausführungsbeispiel mit "horizontal" geteilter Kragträgeranordung 24 der Fahrerplatz an dem ersten Kragträgerabschnitt 50a, nicht aber an dem zweiten Kragträgerabschnitt 50b unmittelbar angekoppelt ist und umgekehrt.

Bei 54 bzw. 154 ist in den Figuren ein Schwingungsdämpfungssystem schematisch dargestellt. Das Schwingungsdämpfungssystem 54 bzw. 154 kann passiv, aktiv oder semiaktiv ausgestaltet sein und beispielsweise eine Reibungsdämpfungsanordnung umfassen, welche eine bremsende Wirkung auf die Bewegung des zweiten Kragträgerabschnittes 50b bzw. 150b relativ zum ersten Kragträgerabschnitt 50a bzw. 150a hat, um Bewegungsenergie in eine andere Energieform, insbesondere Wärme, umzuwandeln, so dass eine Schwingungsdämpfung von Schwingungen des Flurförderzeugs, insbesondere des Hubgerüstes 8 stattfindet. Eine solche Reibungsdämpfungsanordnung kann zum Beispiel mit Reibbelägen versehene, aneinander reibende Reibflächen umfassen. Auch ein hydraulischer Zylinder mit beispielsweise über eine Drosselstelle kurzgeschlossenen Zylinderkammern und gegebenenfalls einem damit verbundenen pneumatischen oder hydropneumatischen Federspeicher kann Element des Dämpfungssystems 54 bzw. 154 sein. Das Dämpfungssystem kann ferner eine Federanordnung, zum Beispiel mechanische Federanordnung, umfassen, welche einer Auslenkung des zweiten Kragträgerabschnittes 50b bzw. 150b relativ zu dem ersten Kragträgerabschnitt 50a bzw. 150a mit elastischer Rückstelltendenz entgegenwirkt.

Es sei darauf hingewiesen, dass gemäß Varianten des Dämpfungssystems 54 bzw. 154 die Steifigkeit von Federanordnungen des Dämpfungssystems 54 bzw. 154 oder/und die Reibungswirkung von Reibungsdämpfungsanordnungen von bestimmten Betriebsparametern oder Betriebsbedingungen des Flurförderzeugs abhängig steuerbar sein können, um die Schwingungsdämpfungswirkung bedarfsweise zu modulieren.

Ein Anwendungsbeispiel: Während der Fahrt des Flurförderzeugs in einem Schmalgang eines Hochregallagers sei die Einrichtung zur Reduzierung von Schwingungen beispielsweise aktiviert, wobei eine Reibungsdämpfungsanordnung des Dämpfungssystems eine der aktuellen Situation angepasste Reibungswirkung bereitstellt. Kommt es bei Fahrt des Flurförderzeugs über Bodenunebenheiten zu einer Querbeschleunigung am Hubgerüst 8 und damit an dem ersten Kragträgerabschnitt 50a bzw. 150a, so wird über die Lageranordnung 52 bzw. 152, die Reibungsdämpfungsanordnung und eine damit zusammenwirkende Federanordnung des Dämpfungssystems 54 bzw. 154 die Querbeschleunigung auf den zweiten Kragträgerabschnitt 50b bzw. 150b übertragen. Überschreitet die Trägheitskraft der betreffenden "entkoppelten bzw. weich gekoppelten" Massen den Wert der eingestellten Reibkraft und der parallel wirkenden Federkraft, so kommt es zu einer Relativbewegung zwischen dem zweiten Kragträgerabschnitt 50b bzw. 150b und dem ersten Kragträgerabschnitt 50a bzw. 150a. Diese relativ zur Soll-Ruhelage hin-und hergehende Relativbewegung reduziert die Gesamt-Schwingungsamplitude des Hubgerüstes 8, und es wird kinetische Energie in der Reibungsdämpfungsanordnung vorwiegend in Wärme umgewandelt.

Das Dämpfungssystem 54 bzw. 154 kann zusätzlich oder alternativ zu passiven Komponenten wenigstens ein Stellglied als aktive Komponente aufweisen. Ein solches Stellglied kann zum Beispiel von einem steuerbaren hydraulischen oder pneumatischen Zylinder oder von einen steuerbaren Elektromotor gebildet sein, und ist zwischen dem zweiten Kragträgerabschnitt 50b bzw. 150b und dem ersten Kragträgerabschnitt 50a bzw. 150a wirksam, um die Kragträgerabschnitte 50a bzw. 150a und 50b bzw. 150b bei relativer Auslenkung zueinander tendenziell zu einer Soll-Nullstellung zu drängen.

Eine Steuerungseinrichtung ist in einem solchen aktiven System vorgesehen, um die aktiven Komponenten zu steuern. Ferner können Sensoren vorgesehen sein, die Schwingungsamplituden des Hubgerüstes oder daran höhenbeweglich angeordneter Komponenten erfassen, wobei die Steuerungseinrichtung Daten dieser Sensoren verarbeiten kann, um die aktiven Komponenten im Sinne einer optimierten Schwingungsreduzierung zu steuern. In diesem Sinne können auch Sensoren vorgesehen sein, die die Relativbewegung des zweiten Kragträgerabschnittes 50b bzw. 150b relativ zum ersten Kragträgerabschnitt 50a bzw. 150a erfassen.

## Patentansprüche

1. Flurförderzeug, insbesondere Dreiseitenstapler, umfassend
ein Chassis (6),
ein an dem Chassis (6) angeordnetes Hubgerüst (8),
einen Fahrerplatz (12),
eine den Fahrerplatz (12) abstützende Tragstruktur (9), die gemeinsam mit dem Fahrerplatz (12) an dem Hubgerüst (8) auf- und abwärts bewegbar ist und wenigstens eine von dem Hubgerüst (8) abstehende Kragträgeranordung (24; 124) aufweist, die sich unter dem Fahrerplatz (12) erstreckt und in Front des Fahrerplatzes (12) an einem Seitenschubrahmen (34) befestigt ist, der Teil einer Lasttragbaugruppe (36) ist,
und eine Einrichtung zur Reduzierung von Schwingungen mit Schwingungskomponenten quer zur Hauptfahrtrichtung (G) des Flurförderzeugs, die Schwingungsreduzierungsbewegungen der Lasttragbaugruppe (36) relativ zu dem Hubgerüst (8) ermöglicht,
**dadurch gekennzeichnet,**
**dass** die Kragträgeranordung (24; 124) unterhalb des Fahrerplatzes (12) eine Teilung aufweist und als einen Teil einen ersten Kragträgerabschnitt (50a; 150a) aufweist, der mit dem Hubgerüst (8) gekoppelt und höhenbeweglich daran geführt ist, und als einen weiteren Teil einen die Lasttragbaugruppe (36) tragenden zweiten Kragträgerabschnitt (50b; 150b) aufweist, der so mit dem ersten Kragträgerabschnitt (50a; 150a) verbunden ist, dass er relativ zu diesem gemeinsam mit der Lasttragbaugruppe (36) Schwingungsreduzierungsbewegungen insbesondere mit Bewegungskomponenten quer zur Hauptfahrtrichtung (G) des Flurförderzeugs ausführen kann, wobei der zweite Kragträgerabschnitt (50b) zur gemeinsamen Bewegung mit dem Seitenschubrahmen (34) verbunden ist.

2. Flurförderzeug nach Anspruch 1, **dadurch gekennzeichnet, dass** der erste Kragträgerabschnitt (50a; 150a) so an dem Hubgerüst (8) höhenbeweglich geführt ist, dass er relativ dazu keinen horizontalen Bewegungsfreiheitsgrad quer zur Hauptfahrtrichtung (G) des Flurförderzeugs aufweist.

3. Flurförderzeug nach Anspruch 1 oder 2, **dadurch gekennzeichnet, dass** der Fahrerplatz an dem ersten Kragträgerabschnitt abgestützt und im Wesentlichen starr damit verbunden ist, so dass der Fahrerplatz Schwingungsreduzierungsbewegungen des zweiten Kragenträgerabschnitts nicht unmittelbar mitmacht.

4. Flurförderzeug nach Anspruch 1 oder 2, **dadurch gekennzeichnet, dass** der Fahrerplatz (12) an dem zweiten Kragträgerabschnitt (50b) abgestützt ist, so dass der Fahrerplatz (12) gemeinsam mit dem zweiten Kragträgerabschnitt (50b) Schwingungsreduzierungsbewegungen relativ zu dem ersten Kragträgerabschnitt (50a) ausführen kann.

5. Flurförderzeug einem der vorhergehenden Ansprüche, **dadurch gekennzeichnet, dass** die Lasttragbaugruppe (36) ein Seitenschubgerät (38), welches seitlich quer zur Hauptfahrtrichtung (G) des Flurförderzeugs bewegbar an dem Seitenschubrahmen (34) gelagert ist, und eine an dem Seitenschubgerät (38) angeordnete Lasttragvorrichtung (40, 42), die zusammen mit dem Seitenschubgerät (38) mittels einer steuerbaren Seitenschubantriebseinrichtung seitlich quer zur Hauptfahrtrichtung (38) des Flurförderzeugs bewegbar ist, umfasst.

6. Flurförderzeug nach einem der vorhergehenden Ansprüche **dadurch gekennzeichnet, dass** die Teilung der Kragträgeranordung (24) in der Weise zumindest bereichsweise und annähernd horizontal ausgebildet ist, dass sich der erste Kragträgerabschnitt (50a) mit dem größten Teil seiner Länge unterhalb des zweiten Kragträgerabschnittes (50b) - diesen von unten abstützend -erstreckt, wobei der zweite Kragträgerabschnitt (50b) mittels einer Lageranordnung (52) bewegbar an dem ersten Kragträgerabschnitt (50a) gelagert ist.

7. Flurförderzeug nach einem der Ansprüche 1 bis 5, **dadurch gekennzeichnet, dass** die Teilung der Kragträgeranordung (124) in der Weise ausgebildet ist, dass der zweite Kragträgerabschnitt (150b) in Front des ersten Kragträgerabschnittes (150a) so angeordnet ist, dass sich die Trennungslinie zwischen dem ersten Kragträgerabschnitt (150a) und dem zweiten Kragträgerabschnitt (150b) von oben nach unten verlaufend erstreckt, wobei der zweite Kragträgerabschnitt (150b) mittels einer Lageranordnung (152) bewegbar an dem ersten Kragträgerabschnitt (150a) gelagert ist, welche sowohl Zugkräfte als auch Druckkräfte sowie Querkräfte zwischen den beiden Kragträgerabschnitten (150a, 150b) aufnehmen kann.

8. Flurförderzeug nach einem der vorhergehenden Ansprüche, **dadurch gekennzeichnet, dass** der zweite Kragträgerabschnitt (50b; 150b) durch ein die Bewegung des zweiten Kragträgerabschnittes (50b; 150b) relativ zum ersten Kragträgerabschnitt beeinflussendes passives oder/und aktives Dämpfungssystem (54; 154) mit dem ersten Lastträgerabschnitt (50a; 150a) gekoppelt ist.

9. Flurförderzeug nach Anspruch 8, **dadurch gekennzeichnet, dass** das Dämpfungssystem (54; 154) eine Reibungsdämpfungsanordnung umfasst.

10. Flurförderzeug nach Anspruch 9, **dadurch gekennzeichnet, dass** die Reibungsdämpfungsanordnung wenigstens einen hydraulischen oder/und pneumatischen Reibungsdämpfungszylinder umfasst, bzw. mit einer elektromagnetischen Reibungsdämpfungseinheit realisiert wird.

11. Flurförderzeug nach einem der Ansprüche 8-10, **dadurch gekennzeichnet, dass** das Dämpfungssystem eine Federanordnung umfasst.

12. Flurförderzeug nach einem der Ansprüche 8-11, **dadurch gekennzeichnet, dass** das Dämpfungssystem wenigstens eine aktive Komponente umfasst, insbesondere wenigstens einen steuerbaren hydraulischen oder/und pneumatischen Zylinder oder/und wenigstens einen steuerbaren Elektromotor, vorzugsweise Servomotor, wobei die aktive Komponente des Dämpfungssystems zwischen dem zweiten Kragträgerabschnitt und dem ersten Kragträgerabschnitt wirksam ist, um den zweiten Kragträgerabschnitt in schwingungsreduzierender Weise zu beaufschlagen.

13. Flurförderzeug nach einem der vorhergehenden Ansprüche, **dadurch gekennzeichnet, dass** die Einrichtung zur Reduzierung von Schwingungen wahlweise aktivierbar und deaktivierbar ist.

14. Flurförderzeug nach Anspruch 13, **dadurch gekennzeichnet, dass** die Einrichtung zur Reduzierung von Schwingungen in Abhängigkeit vom jeweiligen Betriebszustand des Flurförderzeugs automatisch aktivierbar bzw. deaktivierbar ist.

15. Flurförderzeug nach einem der vorhergehenden Ansprüche, **dadurch gekennzeichnet, dass** es als Seitenstapler, vorzugsweise Dreiseitenstapler, ausgebildet ist, dessen Lasttragbaugruppe (36) als Lastträgerelement eine Lasttraggabel (42) mit Lasttragzinken (43) aufweist, welche quer zur Geradeausfahrtrichtung (G) des Flurförderzeugs positioniert bzw. ausrichtbar sind, wobei die Einrichtung zur Reduzierung von Schwingungen in Abhängigkeit von der Ausrichtung der Lasttragzinken (43) oder/und in Abhängigkeit von der Hubhöhenstellung der Lasttragzinken (43) oder/und vom Aufenthaltsort bzw. von der Umgebung des Flurförderzeugs steuerbar ist.

## Claims

1. Industrial truck, in particular a three-way forklift, comprising a chassis (6), a mast (8) arranged on the chassis (6), a driver's cab (12), a support structure (9) supporting the driver's cab (12), which, together with the driver's cab (12), can move upwards and downwards on the mast (8), and at least one cantilever arrangement (24; 124) which projects from the mast (8), extends below the driver's cab (12) and is attached to a side push frame (34) in the front of the driver's cab (12), which frame forms part of a load bearing assembly (36), and a device for reducing vibrations, comprising vibration components transverse to the main direction of travel (G) of the industrial truck, which device allows vibration reducing movements of the load bearing assembly (36) relative to the mast (8), **characterised in that** the cantilever arrangement (24; 124) has a division below the driver's cab (12) and has as one part a first cantilevered portion (50a; 150a) which is coupled to the mast (8) and vertically movable thereon, and, as an additional part, has a second cantilevered portion (50b; 150b) which supports the load bearing assembly (36) and is connected to the first cantilevered portion (50a; 150a) in such a way as to be able to carry out vibration reducing movements relative thereto, together with the load bearing assembly (36), in particular with movement components transverse to the main direction of travel (G) of the industrial truck, the second cantilevered portion (50b) being connected to the side push frame (34) for the purpose of joint movement.

2. Industrial truck according to claim 1, **characterised in that** the first cantilevered portion (50a; 150a) is guided on the mast (8) in a vertically movable manner, such that said portion has no horizontal degree of mobility transverse to the main direction of travel (G) of the industrial truck relative to the mast.

3. Industrial truck according to either claim 1 or claim 2, **characterised in that** the driver's cab is supported on the first cantilevered portion and is substantially rigidly connected thereto, such that the driver's cab does not participate directly in the vibration reducing movements of the second cantilevered portion.

4. Industrial truck according to either claim 1 or claim 2, **characterised in that** the driver's cab (12) is supported on the second cantilevered portion (50b), such that the driver's cab (12), together with the second cantilevered portion (50b), can carry out vibration reducing movements relative to the first cantilevered portion (50a).

5. Industrial truck according to any of the preceding claims, **characterised in that** the load bearing assembly (36) comprises a side push apparatus (38) which is movably mounted on the side push frame (34) laterally transverse to the main direction of travel (G) of the industrial truck, and a load bearing device (40, 42) which is arranged on the side push apparatus (38) and, together with the side push apparatus (38), is laterally movable transverse to the main direction of travel (38) of the industrial truck by means of a controllable side push drive device.

6. Industrial truck according to any of the preceding claims, **characterised in that** the division of the cantilever arrangement (24) is formed at least partially and approximately horizontally in such a way that the first cantilevered portion (50a) extends with the largest part of its length below the second cantilevered portion (50b), supporting it from below, the second cantilevered portion (50b) being movably mounted on the first cantilevered portion (50a) by means of a bearing assembly (52).

7. Industrial truck according to any of claims 1 to 5, **characterised in that** the division of the cantilever arrangement (124) is formed in such a way that the second cantilevered portion (150b) is arranged in front of the first cantilevered portion (150a) in such a way that the dividing line between the first cantilevered portion (150a) and the second cantilevered portion (150b) extends from top to bottom, the second cantilevered portion (150b) being movably mounted on the first cantilevered portion (150a) by means of a bearing assembly (152) which can absorb tensile forces and compressive forces and also transverse forces between the two cantilevered portions (150a, 150b).

8. Industrial truck according to any of the preceding claims, **characterised in that** the second cantilevered portion (50b; 150b) is coupled to the first load bearing portion (50a; 150a) by means of a passive and/or active damping system (54; 154) which influences the movement of the second cantilevered portion (50b; 150b) relative to the first cantilevered portion.

9. Industrial truck according to claim 8, **characterised in that** the damping system (54; 154) comprises a friction damping arrangement.

10. Industrial truck according to claim 9, **characterised in that** the friction damping arrangement comprises at least one hydraulic and/or pneumatic friction damping cylinder, or has an electromagnetic friction damping unit.

11. Industrial truck according to any of claims 8-10, **characterised in that** the damping system comprises a spring arrangement.

12. Industrial truck according to any of claims 8-11, **characterised in that** the damping system comprises at least one active component, in particular at least one controllable hydraulic and/or pneumatic cylinder and/or at least one controllable electric motor, preferably a servomotor, the active component of the damping system operating between the second cantilevered portion and the first cantilevered portion in order to act on the second cantilevered portion in a vibration reducing manner.

13. Industrial truck according to any of the preceding claims, **characterised in that** the device for reducing vibrations can be selectively activated and deactivated.

14. Industrial truck according to claim 13, **characterised in that** the device for reducing vibrations can be automatically activated or deactivated depending on the particular operating state of the industrial truck.

15. Industrial truck according to any of the preceding claims, **characterised in that** it is formed as a sideloader, preferably a three-way forklift, the load bearing assembly (36) of which, as a load bearing element, has a load bearing fork (42) which comprises load bearing tines (43) which are positioned or can be oriented transversely to the straight ahead direction of travel (G) of the industrial truck, the device for reducing vibrations being controllable depending on the orientation of the load bearing tines (43) and/or depending on the lifting height position of the load bearing tines (43) and/or the location or the environment of the industrial truck.

## Revendications

1. Chariot de manutention, plus particulièrement chariot trilatéral comprenant
un châssis (6)
une structure de levage (8) disposée sur le châssis (6),
une place de conducteur (12),
une structure porteuse (9) soutenant la place du conducteur (12), qui est mobile vers le haut et vers le bas, conjointement avec la place du conducteur (12), sur la structure de levage (8) et qui comprend au moins une disposition de poutre en porte-à-faux (24 ; 124) s'éloignant de la structure de levage (8), qui s'étend sous la place du conducteur (12) et qui est fixée à l'avant de la place du conducteur (12), sur un cadre de poussée latérale (34), qui fait partie d'un sous-ensemble de support de charge (36), et un dispositif de réduction des vibrations avec des composantes de vibrations transversalement par rapport à la direction de déplacement principale (G) du chariot de manutention, qui permet les mouvements de réduction des vibrations du sous-ensemble de support de charge (36) par rapport à la structure de levage (8),
**caractérisé en ce que**
la disposition de poutre en porte-à-faux (24 ; 124) comprend, en dessous de la place du conducteur (12), une division et comprend, en tant que partie, une première portion de poutre en porte-à-faux (50a; 150a), qui est couplée avec la structure de levage (8) et y est guidée de manière mobile en hauteur et, en tant qu'une autre partie, une deuxième portion de poutre en porte-à-faux (50b; 150b), supportant le sous-ensemble de support de charge (36), qui est relié avec la première portion de poutre en porte-à-faux (50a; 150a), de façon à ce qu'il puisse effectuer, par rapport à celui-ci, conjointement avec le sous-ensemble de support de charge (36), des mouvements de réduction des vibrations, plus particulièrement avec des composantes de mouvement transversales par rapport à la direction de déplacement principale (G) du chariot de manutention, la deuxième portion de poutre en porte-à-faux (50b) étant relié avec le cadre de poussée latérale (34) pour un déplacement commun.

2. Chariot de manutention selon la revendication 1, **caractérisé en ce que** la première portion de poutre en porte-à-faux (50a; 150a) est guidé de manière mobile en hauteur sur la structure de levage (8), de façon à ce qu'elle ne présente aucun degré de liberté de mouvement horizontal transversal par rapport à la direction de déplacement principale (G) du chariot de manutention.

3. Chariot de manutention selon la revendication 1 ou 2, **caractérisé en ce que** la place du conducteur est appuyée contre la première portion de poutre en porte-à-faux reliée de manière globalement rigide avec celle-ci, de façon à ce que la place du conducteur n'accompagne pas directement les mouvements de réduction des vibrations de la deuxième portion de poutre en porte-à-faux.

4. Chariot de manutention selon la revendication 1 ou 2, **caractérisé en ce que** la place du conducteur (12) est appuyée contre la deuxième portion de poutre en porte-à-faux (50b) de façon à ce que la place du conducteur (50b) puisse effectuer des mouvements de réduction des vibrations par rapport à la première portion de poutre en porte-à-faux (50a).

5. Chariot de manutention selon l'une des revendications précédentes, **caractérisé en ce que** le sous-ensemble de support de charge (36) comprend un appareil de poussée latérale (38) qui est logé de manière mobile latéralement transversalement par rapport à la direction de déplacement principale (G) du chariot de manutention sur le cadre de poussée latérale (34) et un dispositif de support de charge (40, 42), disposé sur l'appareil de poussée latérale (38), qui est mobile, conjointement avec l'appareil de poussée latérale (38), au moyen d'un dispositif d'entraînement à poussée latérale, latéralement transversalement par rapport à la direction de déplacement latérale (38) du chariot de manutention.

6. Chariot de manutention selon l'une des revendications précédentes, **caractérisé en ce que** la division de la disposition de poutre en porte-à-faux (24) est réalisée au moins à certains endroits et de manière approximativement horizontale, de façon à ce que la première portion de poutre en porte-à-faux (50a) s'étende, avec la plus grande partie de sa longueur, en dessous de la deuxième portion de poutre en porte-à-faux (50b), soutenant celui-ci par en dessous, la deuxième portion de poutre en porte-à-faux (50b) étant logée de manière mobile au moyen d'une disposition de palier (52) sur la première portion de poutre en porte-à-faux (50a).

7. Chariot de manutention selon l'une des revendications 1 à 5, **caractérisé en ce que** la division de la disposition de poutre en porte-à-faux (124) est conçue de façon à ce que la deuxième portion de poutre en porte-à-faux (150b) soit disposée à l'avant de la première portion de poutre en porte-à-faux (150a), de façon à ce que la ligne de séparation entre la première portion de poutre en porte-à-faux (150a) et la deuxième portion de poutre en porte-à-faux (150b) s'étend du haut vers le bas, la deuxième portion de poutre en porte-à-faux (150b) étant logée de manière mobile au moyen d'une disposition de palier (152) sur la première portion de poutre en porte-à-faux (150a), qui peut absorber aussi bien les forces de compression que les forces transversales entre les deux portions de poutre en porte-à-faux (150a, 150b).

8. Chariot de manutention selon l'une des revendications précédentes, **caractérisé en ce que** la deuxième portion de poutre en porte-à-faux (50b; 150b) est couplée, à l'aide d'un système d'amortissement passif et/ou actif (54 ; 154) influant sur le mouvement de la deuxième portion de poutre en porte-à-faux (50b; 150b) par rapport à la première portion de poutre en porte-à-faux, avec la première portion de poutre en porte-à-faux (50a ; 150a).

9. Chariot de manutention selon la revendication 8, **caractérisé en ce que** le système d'amortissement (54 ; 154) comprend une disposition d'amortissement par friction.

10. Chariot de manutention selon la revendication 8, **caractérisé en ce que** la disposition d'amortissement par friction comprend au moins un vérin d'amortissement par friction hydraulique et/ou pneumatique, ou est réalisé avec une unité d'amortissement par friction électromagnétique.

11. Chariot de manutention selon l'une des revendications 8 à 10, **caractérisé en ce que** le système d'amortissement comprend une disposition à ressort.

12. Chariot de manutention selon l'une des revendications 8 à 11, **caractérisé en ce que** le système d'amortissement comprend au moins un composant actif, plus particulièrement au moins un vérin hydraulique et/ou pneumatique contrôlable et/ou au moins un moteur électrique contrôlable, de préférence un servomoteur, le composant actif du système d'amortissement agissant entre la deuxième portion de poutre en porte-à-faux et la première portion de poutre en porte-à-faux, afin de solliciter la deuxième portion de poutre en porte-à-faux de façon à réduire des vibrations.

13. Chariot de manutention selon l'une des revendications précédentes, **caractérisé en ce que** le dispositif de réduction des vibrations peut être activé et désactivé.

14. Chariot de manutention selon la revendication 13, **caractérisé en ce que** le dispositif de réduction des vibrations peut être activé ou désactivé automatiquement en fonction de l'état de fonctionnement respectif du chariot de manutention.

15. Chariot de manutention selon l'une des revendications précédentes, **caractérisé en ce qu'**il est conçu comme un chariot latéral, de préférence un chariot trilatéral, dont le sous-ensemble de support de charge (36) comprend, en tant qu'élément de support de charge, une fourche de support de charge (42) avec des branches de support de charge (43), qui sont positionnées ou peuvent être orientées transversalement par rapport à la direction de déplacement tout droit (G) du chariot de manutention, le dispositif de réduction des vibrations pouvant être contrôlé en fonction de l'orientation des branches de support de charge (43) et/ou en fonction de la position de hauteur de levage des branches de support de charge (43) et/ou du lieu de séjour ou de l'environnement du chariot de manutention.
